# EUROPEAN PATENT APPLICATION

(11) **EP 2 284 177 A1**
(43) Date of publication of application: **16.02.2011**
(21) Application number: 08874086.5
(22) Date of filing: 18.12.2008
(51) Int. Cl.: C07K 1/12, C07K 14/435, C14C 3/32, C12S 13/00

(54) **PREPARATION OF PROTEIN FILLING FOR MAKING LEATHER BU ANIMAL HAIR**

(30) Priority: 29.04.2008 CN 200810044317
(71) Applicant: Sichuan University, Sichuan 610065 (CN); Foshan City Nanhai Zhao Fu Leather Product Co., Ltd, Guangdong 528200 (CN)
(72) Inventor: HUANG, Haiguang, Foshan Guangdong 528200 (CN)
(74) Representative: WSL Patentanwälte
(86) International application number: PCT/CN2008/073569
(87) International publication number: WO 2009/132499

(57) **Abstract**

The invention provides a method of preparing a protein filler for making leather using animal hair as the starting material, which comprises the following steps of immersing animal hair in inorganic acid solution, washing with water, drying; immersing hair in reducing agent, washing with water, drying; adding alkaline compound, heating to obtain a viscous liquid, regulating pH to 5-8 by using inorganic acid solution, filtering and drying. A protein filler is prepared.

## Description

### Technical Field

The invention relates to a method of preparing a protein filler for making leather using animal hair as starting material, involving the field of utilizing solid leather waste resource in the manufacture of leather.

### Background Art

Conventionally, a hair-saving unhairing method or a hair-destroying unhairing method may be applied in the manufacture of leather. Toxic and harmful substances in leather wastewater up to date mainly result from sulfur-containing wastewater produced in the unhairing procedure of a hair-destroying unhairing method, wherein COD is higher than 10000mg/L, accounting for about 40% of the total load of leather wastewater; and sulfur content is higher than 5500mg/L, accounting for about 90% of the total sulfur content of leather wastewater. Therefore, the ultimate solution to lowering the pollution of leather industry is a clean unhairing procedure that may be realized by replacing the hair-destroying unhairing method with the hair-saving unhairing method. However, nowadays most leather enterprises prefer the hair-destroying unhairing method rather than the hair-saving unhairing method. The reason for this is not that they fear incomplete unhairing, but that they fear huge stack or deposit of hair once it is recovered, leading to increased cost. Thus, use of hair as a resource may break the bottleneck in wider application of the hair-saving unhairing method.

Despite the tiny proportion of the hair-saving unhairing method in current leather manufacture processes, the unhairing procedure thereof dominates the trend of unhairing processes for two reasons. First, the currently widely used hair-destroying unhairing method incurs severe environmental pollution, while people's consciousness of environmental protection is growing, and environmental regulations are becoming more rigid in most countries. Thus, substitution of the hair-destroying unhairing method for the hair-saving unhairing method is an irresistible trend. Second, when the hair-destroying unhairing method is substituted with the hair-saving unhairing method, the cost for wastewater treatment will be reduced. If the problem of the use of hair as a resource is solved additionally, hair will become another pivot for economic growth. Therefore, there is an urgent need in the field for a technical solution to the problem of the use of hair as a resource.

At present, research of the recycling of animal hair mostly focuses on wool and pig hair. Owing to its special felting property and superior spinnability, wool is generally used in the production of wool felt and fabrics. However, waste wool generated in the unhairing procedure of leather manufacture is valueless for spinning, so that it can only be used to manufacture felt or discarded. Pig hair is thick, robot, rigid and has high rupture strength, so that it is generally used to make brush, etc.. Whereas, cattle hair recovered in the hair-saving unhairing process has neither good spinnability nor sufficient strength. Hence, there are very few reports on the use of waste cattle hair. Being in its exploring stage, the use of cattle hair is still far from industrialization. Therefore, it is an important task in the utilization of solid leather waste to find a way for effective use of animal hair and develop products with high added value. Meanwhile, this is also a technical prerequisite for leather enterprises to use the hair-saving unhairing method.

### Summary of the Invention

The object of the invention is, taking into account the shortcomings of existing technologies, to provide a technology for using recovered waste animal hair based on the hair-saving unhairing method, wherein animal hair is hydrolyzed to give a protein filler which is reused in the re-tanning, filling procedures of leather manufacture, so as to eliminate the cost problem pertaining to the substitution of the hair-saving unhairing method for the hair-destroying unhairing method, and lower the difficulty in the treatment of leather wastewater.

The object of the invention is achieved by using the following technology, wherein all parts of the starting materials are based on weight unless otherwise specified.

According to the first aspect of the invention, there is provided a method of preparing a protein filler for making leather using animal hair as the starting material, comprising:
(1) pretreating the animal hair to obtain pretreated hair, wherein the pretreatment includes inorganic acid soaking and reductive soaking;
(2) hydrolyzing the pretreated hair obtained in step (1) in the presence of an alkaline compound to obtain a thick liquid; and
(3) neutralizing and drying the thick liquid obtained in step (2) to obtain the protein filler for making leather.

According to the second aspect of the invention, there is provided a method of making leather, wherein the leather is re-tanned and filled with the protein filler for making leather of the invention.

According to the third aspect of the invention, there is provided a protein filler for making leather prepared according to the method of the invention.

In an embodiment of the invention, the method of preparing a protein filler for making leather using animal hair as the starting material comprises the following steps:
1. rinsing the animal hair with tap water to make it clean, soaking it for 10-48 hours in a 0.01-05M inorganic acid solution with a volume in which the hair can at least be submerged, rinsing the hair with tap water again to make the solution neutral, filtering off the water, drying in air, and then soaking 600 parts of the hair for 10-48 hours in a 2-30wt% reductive solution with a volume in which the hair can at least be submerged, followed by filtering off the water and drying the hair for later use;
2. placing the pretreated hair in a reactor with an agitator, a thermometer and a reflux condenser, adding a 0.5-20wt% alkaline compound solution with a volume in which the hair can at least be submerged, heating the resultant mixture to 50-95□ and holding for 2-20 hours to obtain a thick liquid;
3. cooling the liquid and then adjusting its pH to 5-8 with an inorganic acid to obtain a 10-20% (solid content) filtrate rich in keratin polypeptide, and then concentrating and drying the filtrate to obtain a protein filler for making leather.

The animal hair is any one of waste cattle hair, waste wool or waste pig hair obtained in the hair-saving unhairing procedure of a leather manufacture process.

The inorganic acid is hydrochloric or sulfuric acid.

The reductive agent is at least one of mercaptoethanol, sodium mercaptoacetate, Na₂S₂O₃, NaHSO₃ and Na₂SO₃.

The alkaline compound is at least one of MgO, CaO, NaOH, KOH, Na₂CO₃ and NaHCO₃.

### Detailed Description of the Invention

The inventors have prepared a protein filler from animal hair by hydrolyzation and reused it in re-tanning and filling procedures of a leather manufacture process, so that the concerns over replacement of the hair-saving unhairing method for the hair-destroying unhairing method are eliminated, and the treatment of leather wastewater is made less difficult. The invention is accomplished on such a basis.

### Animal Hair and Method of Treating the Same

In the technical solution of the invention, "animal hair" is used herein to include any natural hair that may be used to manufacture leather. The animal hair may be cattle hair, wool, pig hair or combinations thereof. Preferably, the animal hair is obtained via the hair-saving unhairing method in leather manufacture. More preferably, the animal hair is any one of waste cattle hair, waste wool or waste pig hair or a combination thereof obtained via the "hair-saving unhairing method" in leather manufacture. Specifically, for example, the animal hair is waste wool obtained via the "hair-saving unhairing method" in leather manufacture.

The "hair-saving unhairing method" as described in the invention is well-known to those skilled in the art. Any conventional method and process in the art may be applied herein, provided that they do not limit the inventive object of the invention. The hair-saving unhairing method includes but is not limited to hair-saving unhairing in a rotating drum, hair-saving unhairing by pile method or plucking hair with a plucker. Non-limiting specific examples of the hair-saving unhairing method include: protecting hair shaft with a hair-protective agent, calcium hydroxide, loosening hair root by allowing a strong alkali and a reductive agent to act on follicle, removing the loosened hair by the mechanical action of a rotating drum and recovering the hair.

In order to solve the environmental problem encountered by the existing hair-destroying unhairing method and the stack problem encountered by the hair-saving unhairing method, the inventors provide a novel technical solution to the reuse of hair as a resource.

Specifically, the technical solution is a method of preparing a protein filler for making leather using animal hair as the starting material, comprising:
(1) pretreating the animal hair to obtain pretreated hair, wherein the pretreatment includes inorganic acid soaking and reductive soaking;
(2) hydrolyzing the pretreated hair obtained in step (1) in the presence of an alkaline compound to obtain a thick liquid; and
(3) neutralizing and drying the thick liquid obtained in step (2) to obtain the protein filler for making leather.

Specifically, in step (1), the inorganic acid soaking is generally carried out using a 0.01-0.5M inorganic acid solution, wherein the inorganic acid solution includes but is not limited to hydrochloric or sulfuric acid. The reductive soaking is generally carried out using a 2-30wt% reductive solution, wherein the reductive agent includes mercaptoethanol, sodium mercaptoacetate, Na₂S₂O₃, NaHSO₃ or Na₂SO₃. Generally, the volume of the inorganic acid is such that the hair can just be submerged. Generally, the volume of the reductive solution is such that the hair can just be submerged. Preferably, the soaking time in each of the inorganic acid and the reductive solution is 10-48 hours. Specifically, the animal hair is rinsed with tap water to make it clean, soaked for 10-48 hours in a 0.01-0.5M inorganic acid solution with a volume in which the hair can at least be submerged, and rinsed with tap water again to make the solution neutral. Water is filtered off, and the hair is dried in air. 600 parts by weight of the hair is soaked for 10-48 hours in a 2-30wt% reductive solution with a volume in which the hair can at least be submerged, followed by filtering off the water and drying the hair for later use.

Specifically, in step (2), the alkaline compound is generally a 0.5-20wt% alkaline compound solution. Generally, the amount of the alkaline compound solution is such that the hair can just be submerged. The temperature of the hydrolyzation is for example 50-95°C , and the time of the hydrolyzation is generally 2-20 hours. Specifically, the above pretreated hair is placed in a reactor with an agitator, a thermometer and a reflux condenser, and to the reactor is added a 0.5-20wt% alkaline compound solution with a volume in which the hair can at least be submerged. The temperature is raised to 50-95°C and held for 2-20 hours. A thick liquid is thus obtained. More specifically, the alkaline compound is at least one of MgO, CaO, NaOH, KOH, Na₂CO₃ and NaHCO₃.

Specifically, in step (3), pH is adjusted to 5-8 during neutralization. More specifically, after the above liquid is cooled down, pH of the liquid is adjusted to 5-8 using an inorganic acid solution. A 10-20% (solid content) filtrate rich in keratin polypeptide is thus obtained, and then concentrated and dried to give a protein filler for making leather.

The inventors have found that, since the hair obtained via the hair-saving unhairing method is less strong than the raw hair, the protein filler for making leather of the invention is more suitable for making leather than the protein filler for making leather obtained from the common raw hair. The inventors have further found that the technical solution of the invention is also suitable for waste cattle hair recovered in the hair-saving unhairing procedure. According to the existing technology, waste cattle hair recovered in the hair-saving unhairing procedure has neither good spinnability nor sufficient strength. Thus, there are very few reports on the utilization of waste cattle hair. With respect to the recovery and utilization of animal hair, most of the researches focus on wool and pig hair. Therefore, the invention has solved the problems encountered by the existing technology, and provides a feasible technical solution to the use of all kinds of animal hair as a resource.

### Method of Leather Manufacture

The inventors have found that qualified leather can be obtained by re-tanning and filling leather with the protein filler for making leather as described above.

The inventors have further found that the hair obtained in the hair-saving unhairing procedure is generally less strong than raw hair, so that when the former is used to prepare a protein filler for making leather to re-tan and fill leather, the resultant leather, with saturated color and a tight grain surface on the whole, is soft, plump and flexible, favorable for dyeing.

The invention will be described in detail with reference to the following examples. It should be noted that the examples are provided herein only for the purpose of making further illustration of the invention instead of limiting the claim scope of the invention. Certain non-essential modifications and alterations may be made by those skilled in the art according to the above description of the invention. Unless otherwise specified, percentages in the examples are based on weight.

### Example 1

600g waste cattle hair obtained via the hair-saving unhairing method was rinsed clean with tap water, and then soaked for 48 hours in 1200g 0.01M hydrochloric acid solution. The cattle hair was rinsed to neutral with tap water. After the water was filtered off, the hair was soaked for 48 hours in 3000ml 30wt% Na₂S₂O₃ solution. The water was filtered off again, and the hair was dried in air. The pretreated cattle hair was placed in a reactor with an agitator, a thermometer and a reflux condenser, and 3000ml 0.5wt% NaOH solution was added to hydrolyze the hair at 95°C for 20 hours. A thick liquid was thus obtained. After the hydrolyzation liquid was cooled down, pH thereof was adjusted to 5 using sulfuric acid solution, and 3200ml hydrolyzation liquid with a solid content of 10% was obtained. After concentration and drying, a protein filler for making leather was obtained.

### Example 2

600g waste wool obtained via the hair-saving unhairing method was rinsed clean with tap water, and then soaked for 10 hours in 1000g 0.5M sulfuric acid solution. The wool was rinsed to neutral with tap water. After the water was filtered off, the hair was soaked for 10 hours in 2000ml 15wt% mercaptoethanol and 12% sodium mercaptoacetate solution. The water was filtered off again, and the hair was dried in air. The pretreated wool was placed in a reactor with an agitator, a thermometer and a reflux condenser, and 2000ml 12wt% Na₂CO₃ and 7wt% NaHCO₃ solution was added to hydrolyze the hair at 70°C for 2 hours. A thick liquid was thus obtained. After the hydrolyzation liquid was cooled down, pH thereof was adjusted to 7 using hydrochloric acid solution, and 1800ml hydrolyzation liquid with a solid content of 20% was obtained. After concentration and drying, a protein filler for making leather was obtained.

### Example 3

600g waste pig hair obtained via the hair-saving unhairing method was rinsed clean with tap water, and then soaked for 24 hours in 1500g 0.3M hydrochloric acid solution. The pig hair was rinsed to neutral with tap water. After the water was filtered off, the hair was soaked for 30 hours in 2500ml 2wt% Na₂SO₃ solution. The water was filtered off again, and the hair was dried in air. The pretreated pig hair was placed in a reactor with an agitator, a thermometer and a reflux condenser, and 2500ml 20wt% NaOH solution was added to hydrolyze the hair at 50°C for 6 hours. A thick liquid was thus obtained. After the hydrolyzation liquid was cooled down, pH thereof was adjusted to 8 using hydrochloric acid solution, and 2600ml hydrolyzation liquid with a solid content of 15% was obtained. After concentration and drying, a protein filler for making leather was obtained.

### Performance Examples

### 1. Protein Filler for Making Leather obtained in Example 1

### 1.1 Yield: 210g.

### 1.2 Performance Indicators

(1) Appearance: coffee or brown powder
(2) Crude protein: 70-80%
(3) pH (1% aqueous solution): 5.5-6.5
(4) Water content: 5-10%
(5) Ash content: 15-20%

### 1.3 Application:

The protein filler for making leather obtained in Example 1 was used in re-tanning and filling of the leather manufacture process, wherein the leather was cattle hide shoe upper leather.

### (1) Process Parameters

Re-tanning: liquor ratio: 2.0 temperature: 35°C
Addition: 4% chrome tanning agent and 3% organic re-tanning agent
Rotating for 1 hour, and standing still overnight
Neutralizing next early morning by: addition of 1.5% sodium formate and 0.4% sodium bicarbonate, rotating for 1 hour
Addition: 5% hair protein powder, and rotating for 1 hour
Dyeing and fat-liquoring: liquor ratio: 1.0 temperature: 50°C
Addition: 2.5% black dye
Addition: 10% fat-liquoring agent
Rotating for 1.5 hours, adding 1% formic acid

After rinsing, the leather was unloaded and horsed up.
(2) Application effect: The resultant leather has good softness and flexibility, rich color and good absorption for dyes. After dyeing, the wastewater is clear without any color. All of the performance indices of the finished cattle shoe upper leather meet the requirements of China Leather Industry Standard QB/T1873-2004.

### 1.4 Environmental Evaluation:

When the wastewater from the hair-saving unhairing method according to the invention is compared with that from the hair-destroying unhairing method, the measured COD of the wastewater from the hair-saving unhairing method is 60% lower than that of the wastewater from the hair-destroying unhairing method (COD is measured according to the method in National Standard GB 11914-89), the nitrogen content is 80% lower (nitrogen content is method according to the method in National Standard GB/T5009.5-1985), and the sulfur content is 30% lower (sulfur content is measured using iodimetry).

### 2. Protein Filler for Making Leather obtained in Example 2

### 2.1 Yield: 230g.

### 2.2 Application:

The protein filler for making leather obtained in Example 2 was used for cattle shoe upper leather.

### (1) Process Parameters

Re-tanning and filling: liquor ratio: 2.0 temperature: 35°C
Addition: 4% hair protein powder, 1.5% chrome tanning agent and 2% organic re-tanning agent
Rotating for 2 hours, and adding 0.8% formic acid
Standing still overnight
Next early morning adding 1.5% sodium formate and 0.2% sodium bicarbonate, pH: 4.5-4.7
Washing with water
Dyeing and fat-liquoring: liquor ratio: 1.5 temperature: 45°C Addition: 3% brown dye
Addition: 10% fat-liquoring agent
Rotating for 1.5 hours, adding 0.6% formic acid

After washing, the leather was unloaded and horsed up.
(2) Application effect: The resultant leather is moderately filled and has good softness and flexibility as well as bright color. All of the performance indices of the finished cattle shoe upper leather meet the requirements of China Leather Industry Standard QB/T 1873-2004.

### 3. Protein Filler for Making Leather obtained in Example 3

### 3.1 Yield: 220g.

### 3.2 Application:

The protein filler for making leather obtained in Example 3 was used for cattle shoe upper leather.

### (1) Process Parameters

Protein powder was used in the same bath for dyeing and fat-liquoring.
Dyeing and fat-liquoring: liquor ratio: 1.5 temperature: 60°C
Addition: 5% protein powder
Addition: 10% fat-liquoring agent, rotating for 1 hour
Addition: 1.5% dark brown dye, rotating for 0.5 hours
Addition 1% formic acid
After washing, the leather was unloaded and horsed up.
(2) Application effect: the whole leather, with saturated color and a tight grain surface, is soft, plump and flexible. All of the performance indices of the finished cattle shoe upper leather meet the requirements of China Leather Industry Standard

### Industrial Application

The invention has the following advantages:
1. The invention makes it possible to replace the hair-destroying unhairing method with the hair-saving unhairing method, for it can reduce pollutant content of leather wastewater substantially, facilitating the comprehensive treatment and up-to-the-standard discharge of the wastewater.
2. The invention provides a simple and practical way for utilizing animal hair.
   Preparation of a protein filler from animal hair and reuse of the protein filler in re-tanning and filling procedures of a leather manufacture process brings remarkable environmental and economic benefits, for it not only solves the problem of waste pollution, but also raises the added value of the products.
3. The protein filler prepared according to the invention shows good performance in re-tanning and filling, wherein dyeing is not affected, and the products exhibit good performances in use.

## Claims

1. A method of preparing a protein filler for making leather using animal hair as the starting material, comprising:
(1) pretreating the animal hair to obtain pretreated hair, wherein the pretreatment includes inorganic acid soaking and reductive soaking;
(2) hydrolyzing the pretreated hair obtained in step (1) in the presence of an alkaline compound to obtain a thick liquid; and
(3) neutralizing and drying the thick liquid obtained in step (2) to obtain the protein filler for making leather.

2. The method of Claim 1, wherein the animal hair is obtained in the hair-saving unhairing procedure of a leather manufacture process.

3. The method of Claim 1, wherein the animal hair is cattle hair, wool or pig hair.

4. The method of Claim 1, wherein the animal hair is cattle hair.

5. The method of Claim 1, wherein the inorganic acid in step (1) is hydrochloric or sulfuric acid.

6. The method of Claim 1, wherein the reductive agent in step (1) is at least one of mercaptoethanol, sodium mercaptoacetate, Na₂S₂O₃, NaHSO₃ and Na₂SO₃.

7. The method of Claim 1, wherein the alkaline compound in step (2) is at least one of MgO, CaO, NaOH, KOH, Na₂CO₃ and NaHCO₃.

8. The method of Claim 1, wherein the method comprises the following steps:
In step (1), rinsing the animal hair with tap water to make it clean, soaking it for 10-48 hours in a 0.01-0.5M inorganic acid solution with a volume in which the hair can at least be submerged, rinsing the hair with tap water again to make the solution neutral, filtering off the water, drying in air, and then soaking 600 parts of the hair for 10-48 hours in a 2-30wt% reductive solution with a volume in which the hair can at least be submerged, followed by filtering off the water and drying the hair for later use; or
In step (2), placing the pretreated hair in a reactor with an agitator, a thermometer and a reflux condenser, adding a 0.5-20wt% alkaline compound solution with a volume in which the hair can at least be submerged, heating the resultant mixture to 50-95□ and holding for 2-20 hours to obtain a thick liquid; or
In step (3), cooling the liquid and then adjusting its pH to 5-8 with an inorganic acid to obtain a filtrate rich in keratin polypeptide with a solid content of 10-20%, and then concentrating and drying the filtrate to obtain a protein filler for making leather.

9. A method of making leather, wherein the leather is re-tanned and filled with the protein filler for making leather obtained in Claim 1 to give re-tanned leather.

10. A protein filler for making leather prepared according to the method of Claim 1.
